# EUROPEAN PATENT APPLICATION

(11) **EP 1 662 246 A1**
(43) Date of publication of application: **31.05.2006**
(21) Application number: 04722442.3
(22) Date of filing: 22.03.2004
(51) Int. Cl.: G01N 13/16

(54) **PROBE REPLACING METHOD FOR SCANNING PROBE MICROSCOPE**

(30) Priority: 23.07.2003 JP 2003200676
(71) Applicant: Hitachi Kenki Finetech Co., Ltd., Bunkyo-ku, Tokyo 113-0034 (JP)
(72) Inventor: MURAYAMA, Ken, Tsuchiura-shi, Ibaraki 300-0832 (JP); KENBO, Yukio, Nerima-ku, Tokyo 177-0041 (JP); KUNITOMO, Yuuichi, Tsuchiura-shi, Ibaraki 300-0042 (JP); HIROKI, Takenori, B101, Apurikottokandatsu, Tsuchiura-shi, Ibaraki 300-0016 (JP); NAGANO, Yoshiyuki, A-201, Centralestate, Tsuchiura-shi, Ibaraki 300-0011 (JP); MORIMOTO, Takafumi, Kashiwa-shi, Chiba 277-0827 (JP); KURENUMA, Toru, Tsuchiura-shi, Ibaraki 300-0027 (JP); YANAGIMOTO, Hiroaki, 2-2-26,Inayoshihigashi, Niihari-gun, Ibaraki 315-0053 (JP); KURODA, Hiroshi, C-1401,2607-8, Shimoinayoshi, Niihari-gun, Ibaraki 315-0052 (JP); MIWA, Shigeru, Niihari-gun, Ibaraki 315-0053 (JP); FURUTANI, Takashi, Yokohama-shi, Kanagawa 234-0053 (JP)
(74) Representative: Winckels, Johannes Hubertus F.
(86) International application number: PCT/JP2004/003851
(87) International publication number: WO 2005/010502

(57) **Abstract**

A probe replacement method for a scanning probe microscope for measuring the surface of a sample, having a cantilever (21) having a probe (20), and a measurement unit for measuring a physical quantity between the probe and sample. The scanning probe microscope is provided with a cantilever mount (22), a cantilever cassette (30), an XY stage (14) and Z stage (15) for moving the cantilever cassette, and an optical microscope (18). The method has a first step for performing alignment between the cantilever mount and the cantilever cassette, selecting a cantilever from the cantilever cassette, and mounting the cantilever thus selected on the cantilever mount; and a second step for moving an optical microscope and setting the mounted cantilever in a prescribed position in the field of view after the cantilever is mounted in the scanning probe microscope. In the second step, a step is provided for moving the optical microscope side or the cantilever side and performing positional adjustment.

## Description

### TECHNICAL FIELD

The present invention relates to a probe replacement method for a scanning probe microscope, and particularly relates to a probe replacement method for a scanning probe microscope that is suitable for performing automatic replacement of the probe in a short time and with highly precise positioning.

### BACKGROUND ART

Scanning probe microscopes (SPM) have been known in conventional practice as measuring devices that have measurement resolution capable of observing atomic-order or minutely sized objects. Scanning probe microscopes have recently been utilized in measuring minute irregularities of shape on the surfaces of substrates or wafers on which semiconductor devices are created, and in various other fields. There are various types of scanning probe microscopes according to the detected physical quantity used in measurement. For example, there are scanning tunneling microscopes (STM) that use a tunnel current, atomic force microscopes (AFM) that use atomic force, magnetic force microscopes that use magnetic force, and the like, and the range of application of these microscopes is currently expanding.

Among the microscopes mentioned above, atomic force microscopes are suitable for high-resolution detection of minute shape irregularities on test sample surfaces, and are producing satisfactory results in semiconductor substrates, disks, and other fields. These microscopes have also recently been used for applications in in-line automatic inspection processes.

An atomic force microscope is provided in its basic structure with a measuring device component that is based on the principle of an atomic force microscope. A tripod-type or tube-type XYZ micromotion mechanism formed using a piezoelectric element is usually provided, and a cantilever having a probe formed at the distal end thereof is attached to the bottom end of the XYZ micromotion mechanism. The distal end of the probe faces the surface of the sample. An optical detection device with an optical lever, for example, is provided to the abovementioned cantilever. Specifically, laser light emitted from a laser light source (laser oscillator) disposed above the cantilever is reflected by the back surface of the cantilever and detected by a photosensor. When there is a displacement in the cantilever due to twisting, bending, or other deformation, the incidence position of the laser light in the photosensor changes. Therefore, when a displacement occurs in the probe and the cantilever, the direction and magnitude of the displacement can be detected based on a detection signal outputted from the photosensor. A comparator and a controller are usually provided as the control system in the structure of the atomic force microscope described above. The comparator compares the detection voltage signal outputted from the photosensor with a reference voltage and outputs a differential signal. The controller generates a control signal so that the differential signal becomes "0," and presents this control signal to the Z micromotion mechanism portion in the XYZ micromotion mechanism. A feedback servo control system for maintaining a constant distance between the sample and the probe is thus formed. By this configuration, the probe can scan the sample surface while tracking the minute irregularities on the surface, and the shape of the sample can be measured.

At the time the atomic force microscope was invented, its main object was to utilize high resolution in the measurement of microscopic surface morphology on the order of nm (nanometers) or smaller. However, the application of scanning probe microscopes is currently expanding to include in-line automatic inspections at an intermediate stage of an in-line device for fabricating semiconductor devices. Such circumstances require measurement of extremely jagged irregularities in the microscopic surface morphology of a semiconductor device created on a substrate or wafer in the actual inspection process.

The attachment structure of the probe of the conventional atomic force microscope will next be described. The probe is usually formed on the bottom surface of the distal end of the cantilever. The cantilever is a cantilever beam-shaped lever member having the required elasticity. Therefore, the attachment structure of the probe is specifically the attachment structure of the cantilever, and the technological nature thereof is essentially the same as that of the cantilever attachment structure. As previously mentioned, the cantilever is attached to the bottom end, particularly the bottom end of the Z micromotion mechanism portion, of the XYZ micromotion mechanism.

The attachment structure of the cantilever will be described in detail. The cantilever has a probe on the bottom surface of the distal end thereof, and also has a cantilever holder at the back end (base part) thereof. When compared from the perspective of the size and shape of the cantilever portion, the cantilever holder is, for example, a rectangular flat panel-shaped component having a comparatively large surface area. A cantilever mount for attaching the cantilever is provided to the bottom side of the Z micromotion mechanism. This cantilever mount attaches the cantilever using suction (vacuum suction) from an air suction mechanism, for example, and fixes/attaches the cantilever to the bottom of the Z micromotion mechanism.

A significant problem in the abovementioned atomic force microscope and other scanning probe microscopes is replacement of the probe. Various measurement modes are proposed in present techniques for minimizing the state of contact between the probe and the sample. However, contact between the probe and the sample cannot be completely eliminated, and abrasion of the distal end of the probe cannot be avoided. Therefore, when the probe becomes worn, the cantilever must be removed from the mount of the scanning probe microscope and replaced with a new cantilever. Due to diversification of measured objects, different types of cantilevers (probes) must be prepared in advance, and the cantilever must be replaced with appropriate timing according to the measurement circumstances. In particular, the automation of probe replacement becomes important when an in-line inspection process using a scanning probe microscope is provided to a semiconductor manufacturing line. In this case, the mechanism for attaching a cantilever having a probe to the cantilever mount is particularly important.

Techniques for automatically replacing the probe in a scanning probe microscope include the technique disclosed in Japanese Patent No. 3,176,931. The scanning probe microscope disclosed in Japanese Patent No. 3,176,931 has the structure and capability for performing automatic probe replacement and positioning. In the scanning probe microscope according to Japanese Patent No. 3,176,931, a cantilever cassette installation platform (installation port) is provided on the sample stage in the vicinity of a sample holder on the sample stage, and a cantilever cassette is provided to this mounting platform. The cantilever cassette has a plurality of receptacles, and a plurality of cantilevers are accommodated in each receptacle. A cantilever mount having a suction mechanism is provided at the bottom of the micromotion mechanism unit (scanner) of the scanning probe microscope, and the cantilever is attached and installed based on the suction effect of the suction mechanism.

In the abovementioned configuration, when the cantilever mounted on the bottom of the micromotion mechanism is replaced, the micromotion mechanism is moved in relative fashion to the placement position of the cantilever cassette by moving, for example, the sample stage, the suction effect is released, the cantilever used thus far is removed to the open receptacle of the cantilever cassette, the micromotion mechanism is then moved to the new cantilever position, and the new cantilever is installed based on the resumed suction effect.

In the abovementioned cantilever replacement, positioning of the micromotion mechanism with respect to the prescribed open receptacle for the cantilever cassette, the new cantilever, or the like is performed based on observation using an optical microscope, for example. Specifically, an image of the observed field of view is acquired by a television camera, the position of the cantilever is automatically recognized from the image, the position for mounting is determined, the approach operation is performed by the Z stage in the sample stage, and mounting of the cantilever based on the suction effect of the suction device is completed.

Automatic replacement of the cantilever, specifically, automatic replacement of the probe, in the scanning probe microscope can be performed as described above. In actuality, the optical axis is aligned and the position and the like of the optical detection device for radiating laser light onto the back surface of the cantilever are set so that subsequent SPM measurement can then be performed.

The automatic replacement method for the probe disclosed in Japanese Patent No. 3,176,931 has drawbacks in that probe replacement takes time. A first reason for this is that although a vacuum suction system is used as the attachment method, the attachment position is misaligned during suction attachment, and frequent removal and reattachment occur in the worst case. A second reason is that since the position is determined prior to attachment of the probe in this method, the positioning must be accurate, and the attachment operation becomes complex. Replacement therefore takes time. These problems compound each other.

The process for attaching the cantilever by the automatic replacement method for the probe according to Japanese Patent No. 3,176,931 includes the following nine steps.
(1) XY movement: The position of the cantilever being attached is aligned with the position of the cantilever mount.
(2) Movement by the Z stage: Position adjustment is performed by the Z stage of the sample stage while the cantilever holder is not touching the cantilever mount.
(3) Focus by optical microscope: The focal point of the optical microscope is aligned with the back surface of the cantilever.
(4) Recognition of the cantilever position: The position of the cantilever is confirmed by pattern recognition using the image acquired by the camera.
(5) Fine adjustment of the XY stage: The XY stage of the sample stage is finely adjusted according to the results of step (4) so that the cantilever is in the prescribed position (usually the center position) in the field of view of the optical microscope.
(6) Attachment of the cantilever: The Z stage is raised, and the cantilever is attached. Vacuum suction attachment is usually used.
(7) Focusing by the optical microscope: The focal point of the optical microscope is aligned with the back surface of the cantilever.
(8) Recognition/confirmation of the cantilever position: The position of the cantilever in the mounted state is confirmed using the image acquired by the camera.
(9) Removal: When there is a failure to mount the cantilever in step (8), the cantilever is removed, and the process is repeated from step (2).

As described above, by the conventional automatic probe replacement method, mounting errors during mounting of the cantilever are difficult to eliminate in a method that uses vacuum suction attachment or the like, and misalignment can easily occur. When the misalignment is significant, the position of the cantilever is sometimes outside the field of view of the optical microscope. The operation for mounting the cantilever must be performed again in such cases. This type of conventional automatic probe replacement method involves a complex process having numerous steps, and the mounting operation must be repeated when there is an error in the attachment position.

After the probe (specifically, the cantilever) is replaced, a large amount of time is required for performing operations involving the radiation position of the laser light used in the optical detection device for detecting elastic deformation of the cantilever, such as operations for moving and setting the laser light source; operations for moving the position of the photosensor for receiving the laser light emitted from the laser light source and reflected by the cantilever, and adjusting the detection position on the photosensor to the prescribed position; and other operations.

A large amount of time is therefore required for the probe replacement operation.

In view of the foregoing drawbacks, an object of the present invention is to provide a probe replacement method for a scanning probe microscope whereby automatic mounting or replacement of the probe can be performed with high precision in a short time.

Another object of the present invention is to provide a probe replacement method for a scanning probe microscope whereby after the cantilever (probe) has been automatically mounted or replaced, the attachment state of the cantilever can be automatically determined, and the positions of the photosensor and the light source of the optical detection device for detecting displacement of the cantilever can be automatically adjusted.

### DISCLOSURE OF THE INVENTION

The probe replacement method for the scanning probe microscope according to the present invention for achieving the abovementioned objects is constituted as follows.

The probe replacement method according to a first aspect is a probe replacement method for a scanning probe microscope comprising a cantilever provided so that a probe faces a sample; and a measurement unit (a component having an optical detection device with an optical lever, a feedback servo control system, a scanning device, an XYZ micromotion mechanism, a control device for data processing and the like, and other components) for measuring a physical quantity generated between the probe and the sample when the probe scans the surface of the sample; wherein the surface of the sample is scanned with the probe and the surface of the sample is measured while the physical quantity is kept constant by the measuring unit. This scanning probe microscope further comprises a cantilever mount provided with a mechanism (vacuum attachment mechanism using a vacuum suction device or the like) for attaching and detaching the cantilever, a cantilever storage unit (cantilever cassette) for accommodating/storing a plurality of cantilevers, a first movement mechanism (XY stage and Z stage) for moving the position of the cantilever storage unit, and an observation device for observing the position of the mounted cantilever. The probe replacement method for the scanning probe microscope according to the present invention comprises a step for aligning the cantilever storage unit and the cantilever mount using the first movement mechanism, selecting one cantilever from the cantilever storage unit, and mounting the cantilever to the cantilever mount; and a step for changing the relative positions of the observation device and the cantilever after mounting of the cantilever, and setting the mounted cantilever in the prescribed position of the field of view of the observation device. By this configuration, replacement of the probe is performed automatically by an operation having a small total number of steps.

The probe replacement method is characterized in that the cantilever is set to a prescribed position in the field of view of the observation device by moving the observation device using a second movement mechanism. The observation device is configured so that the position thereof is moved in the XY plane by the second movement mechanism.

The probe replacement method is characterized in that the cantilever is preferably set to a prescribed position in the field of view of the observation device by moving the cantilever side using a positioning mechanism that is moved by the first movement mechanism.

The probe replacement method is preferably a method in which the observation device is preferably an optical microscope, pattern recognition is performed using an image acquired by an optical microscope and a TV camera, and the mounting position of the mounted cantilever is specified.

The probe replacement method is characterized in that that the prescribed position is preferably the center position of the field of view.

The probe replacement method for a scanning probe microscope according to a second aspect is applied to a scanning probe microscope comprising a cantilever having a probe at the distal end thereof and a cantilever holder at the basal end thereof, and a measurement unit for measuring a physical quantity generated between the probe and a sample when the probe scans the surface of the sample, wherein the surface of the sample is scanned with the probe and the surface of the sample is measured while the physical quantity is kept constant by the measuring unit. This scanning probe microscope further has a cantilever mount provided with a mechanism for detaching the cantilever via the cantilever holder, a cantilever storage unit for storing a plurality of cantilevers, a first movement mechanism for moving the position of the cantilever storage unit, and an observation device for observing the position of the mounted cantilever. The scanning probe microscope further has a positioning mechanism moved by the first movement mechanism, for adjusting the position of the cantilever attached to the cantilever mount. The probe replacement method for the scanning probe microscope having the above configuration comprises a step for performing alignment with the cantilever storage unit, selecting one cantilever from the cantilever storage unit, and mounting the cantilever to the cantilever mount via the cantilever holder; a step for aligning the positioning mechanism with the cantilever mount on which the cantilever is mounted, using the first movement mechanism; a step for capturing an image of the mounted cantilever in the observation device after the cantilever thus selected is attached to the cantilever mount; and a step for changing the position of the cantilever with respect to the cantilever mount using the positioning mechanism and moving the position of the cantilever to a prescribed position in the field of view of the observation device.

In the abovementioned probe replacement method, it is preferred that the positioning mechanism have a pushing member for pushing the side surface of the cantilever holder attached to the cantilever mount.

In the abovementioned probe replacement method, it is preferred that the pushing member be an L-shaped pushing member that is in contact with two of the side surfaces of a cantilever holder having a rectangular planar shape.

The abovementioned probe replacement method preferably comprises a step for determining the attachment state of the cantilever attached to the cantilever mount.

The abovementioned probe replacement method preferably comprises a step for detecting the distal end position of the cantilever and storing a coordinate value thereof, and an adjustment step for the optical axis adjustment of the position of the photosensor and the laser light source of an optical detection device for radiating laser light onto the cantilever and generating laser light for detecting the curvature of the cantilever based on the stored coordinate value.

In the abovementioned probe replacement method, it is preferred that the observation device be an optical microscope, and that the probe replacement method comprise a step for performing pattern recognition and image processing using an image obtained by the optical microscope; and a step for identifying the attachment position of the cantilever attached to the cantilever mount.

The probe replacement method preferably comprises a step for detecting the coordinate value of the distal end position or central axis of the cantilever by performing image processing of the image obtained by the observation device when the attachment position of the cantilever is identified; and a step for storing the coordinate value.

The probe replacement method preferably comprises a step for calculating a range of target positions for radiating laser light onto the cantilever according to the type of cantilever based on the stored coordinate value of the distal end position or central axis of the cantilever; and a step for automatically setting the irradiation position of the laser light radiated onto the cantilever to a prescribed position within the radiation target range using the image obtained by the observation device and the output signal from the photosensor, while moving the position of the laser light source in relative fashion by the second movement mechanism.

The probe replacement method preferably comprises a step for moving the position of the photosensor in relative fashion by a third movement mechanism and automatically setting the laser light reception position on the photosensor to a prescribed position, based on the stored coordinate value of the position or central axis.

When a substrate or other sample on which a semiconductor device, for example, is fabricated is measured/inspected in an in-line automatic inspection process using an atomic force microscope or other scanning probe microscope, a probe is scanned according to an automatic measurement algorithm, and the irregular shape of the sample surface is measured. The samples being measured are continuously taken in at a constant time interval. Therefore, when automatic measurement is completed for a prescribed number of samples, for example, the distal end of the probe is worn, and replacement with a new probe must be performed. During replacement of the probe, the cantilever currently in use is removed from the cantilever mount, and a new cantilever is attached to the cantilever mount. A plurality of cantilevers are stored in advance in the cantilever storage unit. The cantilever thus removed is accommodated in a prescribed empty receptacle of the cantilever storage unit, and one new cantilever is selected from among the plurality of cantilevers in the cantilever storage unit.

Each position of the plurality of cantilevers in the cantilever storage unit is confirmed by a coordinate management method or other method in advance in the coordinate system established on the sample stage, and the position data is managed in a storage unit of the control device. When a new cantilever is mounted on the cantilever mount, the cantilever storage unit is moved by the first movement mechanism. Usually, the new cantilever is matched with the position of the cantilever mount by the XY stage, and the cantilever is caused to approach in the direction of the cantilever mount and is mounted on the cantilever mount by the Z stage. After the cantilever is mounted, the optical microscope or the like is moved by the second movement mechanism, for example, and the position of the cantilever is adjusted so as to be in the center position or other position of the field of view. When the cantilever is in a position outside the field of view of the optical microscope or the like, the cantilever is found by a search algorithm, and position adjustment is performed so that the cantilever eventually reaches the central position or other position.

The probe replacement method for a scanning probe microscope according to the first aspect is not a method for adjusting the position of the cantilever before the cantilever is attached, but is configured so as to perform fine adjustment of the position of the mounted cantilever using an observation device after the cantilever has been attached. Reattachment of the cantilever therefore does not occur. Consequently, fine adjustment of the position prior to attachment can be omitted, reattachment becomes unnecessary, the number of control steps for replacement is reduced, and it becomes possible to replace the probe in an extremely short time.

The probe replacement method for a scanning probe microscope according to the second aspect is not a method for adjusting the position of the cantilever before the cantilever is attached, but is configured so as to move and change the cantilever side and perform fine adjustment of the attachment position of the cantilever with respect to the cantilever mount while observing with an observation device the position of the mounted cantilever after mounting. Reattachment of the cantilever therefore does not occur. Consequently, fine adjustment of the position prior to attachment can be omitted, reattachment becomes unnecessary, the number of control steps for replacement is reduced, and it becomes possible to replace the probe in an extremely short time. Since the optical axis of the optical microscope can be automatically adjusted, an arrangement conducive to accurate measurement can also be created.

In the probe replacement method for a scanning probe microscope according to the present invention, when a new cantilever is mounted on the cantilever mount, the attachment position of the cantilever is finely adjusted using an optical microscope or the like, and mounting errors are minimized. Therefore, reattachment does not occur even when an error occurs in the cantilever mounted on the mount, the number of steps for replacement can be reduced, and replacement can be performed in an extremely short time.

### BRIEF DESCRIPTION OF THE DRAWINGS

Fig. 1 is a schematic diagram showing the overall structure of a scanning probe microscope to which the probe replacement method according to a first embodiment of the present invention is applied;
Fig. 2 is a perspective view of the specific structure of the sample stage in a first embodiment of the present invention;
Fig. 3 is a plan view of a specific example of the cantilever cassette;
Fig. 4 is a sectional view along line A-A in Fig.3;
Fig. 5 is a block diagram showing a configuration in which the scanning probe microscope according to the present invention is used in an in-line automatic inspection process;
Fig. 6 is a flowchart showing the process of the cantilever mounting operation in probe replacement;
Fig. 7 is a diagram showing conditions in the field of view of the optical microscope;
Fig. 8 is a schematic diagram showing the overall structure of a scanning probe microscope to which the probe replacement method according to a second embodiment of the present invention is applied;
Fig. 9 is a perspective view of the specific structure of the sample stage in a second embodiment of the present invention;
Fig. 10 is a plan view of the pushing member of the positioning mechanism;
Fig. 11 is a side view of the pushing member of the positioning mechanism;
Fig. 12 is a plan view showing the operational state of the pushing member of the positioning mechanism;
Fig. 13 is a plan view showing a state in which the cantilever unit mounted on the mount is moved by the positioning mechanism in the second embodiment;
Fig. 14 is a display view showing the alignment of the cantilever with the center of the display in the field of view of the optical microscope;
Fig. 15A is a flowchart showing the sequence of the first half of the automatic probe replacement method according to a second embodiment of the present invention;
Fig. 15B is a flowchart showing the sequence of the latter half of the automatic probe replacement method according to a second embodiment of the present invention;
Fig. 16 is a diagram showing the optical axis system of the optical detection device as viewed from the free end side of the cantilever;
Fig. 17 is a plan view of the optical axis system of the optical detection device;
Fig. 18 is a diagram showing the light-receiving surface and light-receiving state of the photosensor; and
Fig. 19 is a display view for describing the automatic adjustment of the optical axis, and shows the observed image of the optical microscope.

### BEST MODE FOR CARRYING OUT THE INVENTION

Preferred embodiments of the present invention will be described hereinafter based on the accompanying drawings.

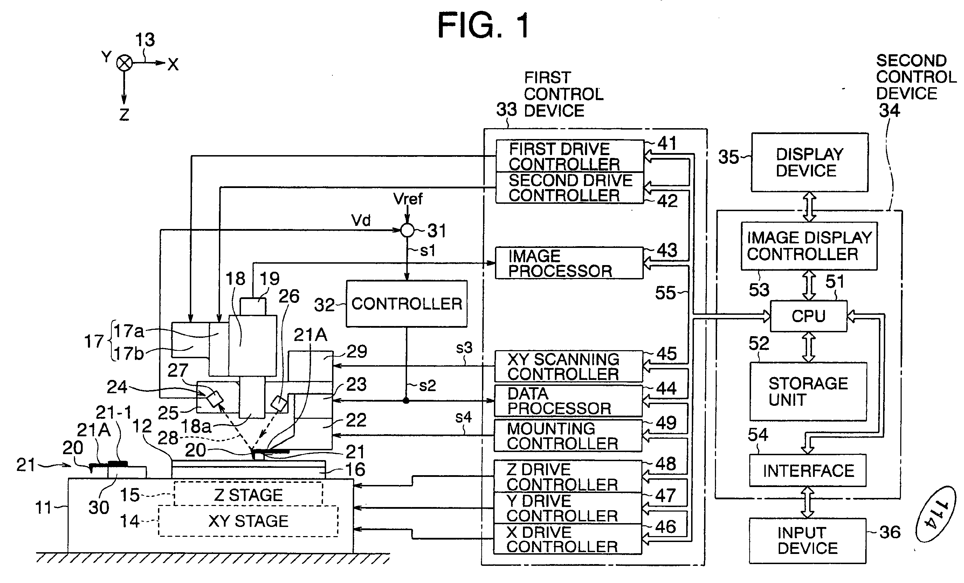

A first embodiment of the present invention will be described with reference to Figs. 1 through 7. A method is proposed in this first embodiment whereby structural components relating to the display side are moved and positional adjustment is performed by adjusting the relative positional relationship of the cantilever image and the display in the display of the field of view obtained by an optical microscope and a TV camera in the automatic probe replacement method for a scanning probe microscope.

The overall structure of a scanning probe microscope (SPM) to which the probe replacement method of the present invention is applied will be described according to Fig. 1. An atomic force microscope (AFM) will be assumed as a typical example of this scanning probe microscope. However, the scanning probe microscope is not limited to being an atomic force microscope.

In Fig. 1, a sample stage 11 is provided to the bottom side portion of the scanning probe microscope. A sample 12 is placed on the sample stage 11. The sample stage 11 is a mechanism for changing the position of the sample 12 in a three-dimensional coordinate system 13 having orthogonal X, Y, and Z-axes. The sample stage 11 has an XY stage 14, a Z stage 15, and a sample holder 16. The sample stage 11 is usually configured as a flutter mechanism for causing displacement (position change) on the sample side. The sample 12 in the shape of a thin sheet having a comparatively large surface area, for example, is placed and retained on the top surface of the sample holder 16 of the sample stage 11. The sample 12 is a substrate or wafer on whose surface an integrated circuit pattern of a semiconductor device is fabricated, for example. The sample 12 is fixed on the sample holder 16. The sample holder 16 is provided with a latch mechanism for fixing the sample.

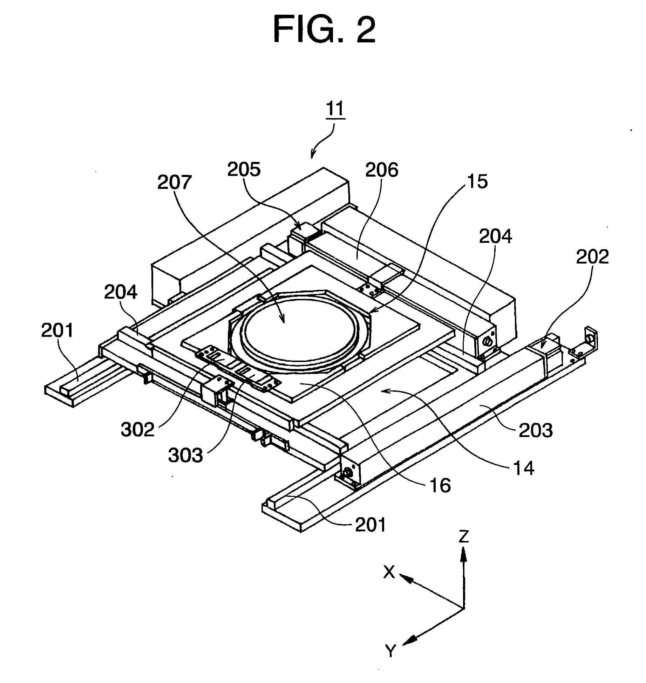

A specific structural example of the sample stage 11 will be described with reference to Fig. 2. In Fig. 2, the reference numeral 14 indicates the XY stage, and the reference numeral 15 indicates the Z stage. The XY stage 14 is a mechanism for moving the sample on the horizontal plane (XY plane), and the Z stage 15 is a mechanism for moving the sample 12 in the vertical direction (Z-axis direction). The Z stage 15 is mounted and attached on the XY stage 14, for example.

The XY stage 14 has a Y-axis mechanism composed of two parallel Y-axis rails 201 disposed in the Y-axis direction, a Y-axis motor 202, and a Y-axis drive force transmission mechanism 203. The stage also has an X-axis mechanism composed of two X-axis rails 204 disposed in the X-axis direction, an X-axis motor 205, and an X-axis drive force transmission mechanism 206. The Z stage 15 is caused to move in the X-axis direction or the Y-axis direction by the XY stage 14. A drive mechanism for raising the sample holder 16 in the Z-axis direction is also provided to the Z stage 15. In Fig. 2, this drive mechanism is hidden, and is not shown in the drawing. A latch mechanism 207 for securing the sample 12 is provided on the sample holder 16. A mechanism that uses a mechanical effect, vacuum attachment, electrostatic attachment, or another effect is usually used in the latch mechanism 207.

Fig. 1 will again be used in this description. An optical microscope 18 provided with a drive mechanism 17 is disposed above the sample 12. The optical microscope 18 is supported by the drive mechanism 17. The drive mechanism 17 has a Z-direction focusing movement mechanism 17a for moving the optical microscope 18 in the Z-axis direction, and an XY-direction movement mechanism 17b for moving the optical microscope in the X- and Y-axis directions. As the mounting relationship, the Z-direction movement mechanism 17a moves the drive mechanism 17 in the Z-axis direction, and the XY-direction movement mechanism 17b moves the optical microscope 18 and the Z-direction movement mechanism 17a as a unit in the X- and Y-axis directions. The XY-direction movement mechanism 17b is fixed to a frame member, but this frame member is not shown in Fig. 1. The optical microscope 18 is disposed with the objective lens 18a thereof facing downward, and is positioned so as to approach the sample 12 from directly above the surface thereof. A TV camera (imaging device) 19 is attached to the top end of the optical microscope 18. The TV camera 19 captures and acquires an image of a specified area of the sample surface brought in by the objective lens 18a, and outputs image data.

A cantilever unit 21 (cantilever 21 in a broad sense) provided with a probe 20 on the distal end thereof is disposed on the top side of the sample 12 so as to approach the sample. The cantilever unit 21 is fixed to a mount 22.

The cantilever unit 21 (cantilever 21 in a broad sense) has an elastically bendable lever member 21A (cantilever 21A in a narrow sense) provided with the probe 20 on one free end thereof, and a cantilever holder 21-1 for supporting the base of the lever member 21A. More specifically, a silicon base is provided to the connecting portion between the lever member 21A and the cantilever holder 21-1. The cantilever holder 21-1 has a rectangular flat shape with an 8-mm pitch, for example.

The mount 22 is a device for attaching the cantilever holder 21-1 of the cantilever unit 21. The mount 22 is provided with an air suction unit (not shown in the drawing), for example, and this air suction unit is connected to an air suction device (not shown in the drawing). The cantilever holder 21-1 having a large-surface-area portion is attached by the air suction unit of the mount 22, whereby the cantilever unit 21 is fixed and mounted based on a vacuum attachment effect.

The abovementioned mount 22 is attached to a Z micromotion mechanism 23 for inducing micromotion operation in the Z direction. The Z micromotion mechanism 23 is attached to the bottom surface of a cantilever displacement detector 24. The cantilever displacement detector 24 is attached to an XY micromotion mechanism 29 for inducing micromotion operation in the XY directions, as described hereinafter. It therefore becomes possible to move the mount 22 minute distances in the X, Y, and Z directions using the Z micromotion mechanism 23 and the XY micromotion mechanism 29.

The cantilever displacement detector 24 has a configuration in which a laser light source 26 and a photosensor 27 are attached to a support frame 25 in a prescribed positional relation. The laser light source 26 is a laser diode (LD) for emitting a laser light, and the photosensor 27 is a photodiode (PD) for receiving laser light. The cantilever displacement detector 24 and the cantilever unit 21 are retained in a constant positional relation, and the laser light 28 emitted from the laser light source 26 is reflected by the back surface of the lever member 21A and radiated to the photosensor 27. The cantilever displacement detector 24 constitutes an optical detection device with an optical lever. When twisting, bending, or other deformation occurs in the cantilever 21A, the displacement thereof due to this deformation can be detected by the optical detection device with an optical lever.

In the abovementioned cantilever displacement detector 24, the laser light source 26 and the photosensor 27 are each provided with movement mechanisms capable of adjusting the positions thereof on the support frame 25.

The cantilever displacement detector 24 is attached to the XY micromotion mechanism 29. The cantilever unit 21, the probe 20, and other components are moved minute distances in the X- and Y-axis directions by the XY micromotion mechanism 29. When such movement occurs, the cantilever displacement detector 24 is simultaneously moved, and the positional relationship between the cantilever unit 21 and the cantilever displacement detector 24 is unchanged.

In the configuration described above, the Z micromotion mechanism 23 and the XY micromotion mechanism 29 usually have piezoelectric elements. The probe 20 is moved minute distances (from several to tens of micrometers, for example; a maximum of 100 µm) in the X-axis direction, the Y-axis direction, and the Z-axis direction by the Z micromotion mechanism 23 and the XY micromotion mechanism 29.

The abovementioned XY micromotion mechanism 29 is also attached to the frame member (not shown in the drawing) described previously to which the unit relating to the optical microscope 18 is attached.

In the mounting relationship described above, the field of view of the optical microscope 18 includes a specified area of the surface of the sample 12, and the distal end portion (back surface portion) in the cantilever 21A that includes the probe 20.

A cantilever cassette 30 is disposed in the vicinity of the sample holder 16 on the top surface of the sample stage 11. A plurality of other cantilever units 21 are accommodated and stored in the cantilever cassette 30. An example is shown in Fig. 1 in which a plurality of cantilever units 21 are simply arranged in a row. The plurality of cantilever units 21 are prepared as new replacements. Each cantilever unit 21 is provided with a probe 20 on the bottom side of the distal end thereof, and has a cantilever holder 21-1 at the back end (base) thereof. A plurality of cantilever units 21 are accommodated in the cantilever cassette 30, and an accommodating space is also provided for accommodating the cantilever unit when the cantilever unit 21 mounted on the mount 22 is removed. This accommodating space of the cantilever cassette 30 is the space in which the cantilever unit 21 mounted as shown in Fig. 1 was originally stored prior to being attached to the mount 22.

The control system of the scanning probe microscope will next be described. The control system has a comparator 31, a controller 32, a first control device 33, and a second control device 34. The controller 32 is essentially designed for implementing a basic measurement mechanism using an atomic force microscope (AFM), for example. The first control device 33 is a control device for performing drive control of each of the plurality of drive mechanisms and the like, and the second control device 34 is an upper-level control device.

The comparator 31 compares the voltage signal Vd outputted from the photosensor 27 with a pre-set reference voltage (Vref), and outputs the differential signal s1. The controller 32 generates a control signal s2 so as to bring the differential signal s1 to zero, and presents this control signal s2 to the Z micromotion mechanism 23. Upon receiving the control signal s2, the Z micromotion mechanism 23 adjusts the height position of the cantilever unit 21 and causes a constant distance to be maintained between the probe 20 and the surface of the sample 12. The control loop from the photosensor 27 to the Z micromotion mechanism 23 is a feedback servo control loop for maintaining the distance between the probe 20 and the sample 12 at a prescribed constant distance determined based on the reference voltage (Vref) while the deformation state of the cantilever unit 21 is detected by the optical detection device with an optical lever when the sample surface is scanned by the probe 20. The probe 20 is kept a constant distance from the surface of the sample 12 by this control loop, and when the surface of the sample 12 is scanned in this state, the irregular shape of the sample surface can be measured.

The first control device 33 is a control device for driving the components of the scanning probe microscope, and is provided with such functional components as the following.

The position of the optical microscope 18 is changed by the drive mechanism 17 having the XY-direction movement mechanism 17b and the Z-direction movement mechanism 17a for focusing. In the image described hereinafter, the Z-direction movement mechanism 17a changes the position of the image focal point, and the XY-direction movement mechanism 17b changes the XY position of the image. The first control device 33 is provided with a first drive controller 41 and a second drive controller 42 for controlling the operation of the Z-direction movement mechanism 17a and the XY-direction movement mechanism 17b, respectively.

The image of the sample surface or the cantilever 21A obtained by the optical microscope 18 is captured by the TV camera 19 and accessed as image data. The image data obtained by the optical microscope 18 and TV camera 19 is inputted to the first control device 33 and processed by an internal image processor 43.

In the feedback servo control loop described above that includes the controller 32 and other components, the control signal s2 outputted from the controller 32 is the height signal for the probe 20 in the scanning probe microscope (atomic force microscope). Information relating to changes in the height position of the probe 20 can be obtained from the height signal (control signal s2) of the probe 20. The control signal s2 that includes the height position information of the probe 20 is presented to the Z micromotion mechanism 23 as previously described for drive control, and is incorporated into a data processor 44 inside the control device 33.

Scanning of the sample surface by the probe 20 in the measurement area of the surface of the sample 12 is performed by driving the XY micromotion mechanism 29. An XY scanning controller 45 for supplying the XY micromotion mechanism 29 with an XY scanning signal s3 performs drive control of the XY micromotion mechanism 29.

Driving of the XY stage 14 and Z stage 15 of the sample stage 11 is controlled by an X drive controller 46 for outputting an X direction drive signal, a Y drive controller 47 for outputting a Y direction drive signal, and a Z drive controller 48 for outputting a Z direction drive signal.

The attachment and detachment operation performed by the mount for attaching or detaching the cantilever in the mount 22 for mounting the cantilever unit 21 by vacuum attachment based on air suction is performed by a mounting controller 49 for presenting an attachment/detachment signal s4 to the mount 22.

The first control device 33 is also provided with a storage unit (not shown in the drawing) for storing/preserving set control data, inputted optical microscope image data, data relating to the height position of the probe, or other data as needed.

A second control device 34 is provided that is placed in a high level with respect to the first control device 33. The second control device 34 performs the usual storage/execution of the measurement program and the usual setting/storage of measurement conditions, the storage/execution of the automatic measurement program and the setting/storage of the measurement conditions thereof, retention of measurement data, image processing of measurement results, displaying in the display device (monitor) 35, and other types of processing. Particularly in the case of the present invention, a replacement process is included for automatically replacing the probe in automatic measurement, and a program is provided for selecting the probe to be used from the cantilever cassette 30 and attaching the probe, or detaching the mounted probe and placing the probe thus detached in the prescribed receptacle of the cantilever cassette 30, and executing other functions. Setting of basic items such as the measurement range and measurement speed, and other automatic measurement conditions, storing the conditions in a setting file, and other functions are also included in setting of the measurement conditions. The second control device may also have communication capability, and may be provided with the capability of communicating with an external device.

Particularly for automatically replacing the probe according to the present embodiment, the second control device 34 has a coordinate system set therein for determining an arbitrary position in the XY plane area on the sample stage 11, and has functionality for measuring coordinates based on the coordinate system. This coordinate management capability enables position to be managed for the movement amount and movement direction in XY movement by the XY stage 14, XY movement of the optical microscope 18 by the XY-direction movement mechanism 17b, and the like.

The second control device 34 has the abovementioned capability, and therefore has a storage unit 52 and a CPU 51 as a processing device. The various programs and the condition data, position data, or other data described above are stored in the storage unit 52. The second control device 34 is also provided with an image display controller 53 and a communication unit or the like. An input device 36 is also connected to the second control device 34 via an interface 54, and the measurement program, measurement conditions, data, and the like stored in the storage unit 52 can be set/changed by the input device 36.

The CPU 51 of the second control device 34 provides the functional components of the first control device 33, via a bus 55, with upper-level control commands as well as image data from the image processor 43, the data processor 44, or the like; data relating to the height position of the probe; and position data for various moving components.

The basic operation of the scanning probe microscope (atomic force microscope) described above will next be described.

The distal end of the probe 20 of the cantilever unit 21 is caused to approach a prescribed area on the surface of a semiconductor substrate or other sample 12 placed on the sample stage 11. Usually, the probe 20 is brought near the surface of the sample 12 by the Z stage 15, which is the mechanism for causing the probe to approach the sample; atomic force is applied; and bending deformation is induced in the cantilever 21A. The amount of bending due to this deformation of the cantilever 21A is detected by the aforementioned optical detection device with an optical lever. In this state, the sample surface is scanned (XY scanning) by moving the probe 20 with respect to the sample surface. XY scanning of the surface of the sample 12 by the probe 20 is performed by creating a relative movement relationship between the sample 12 and the probe 20 in the XY plane by moving (micromotion) the probe 20 side using the XY micromotion mechanism 29, or by moving (coarse motion) the sample 12 side using the XY stage 14.

Movement of the probe 20 side is performed by presenting an XY scanning signal s3 that relates to XY micromotion to the XY micromotion mechanism 29 provided with the cantilever unit 21. The XY scanning signal s3 relating to XY micromotion is presented from the XY scanning controller 45 in the first control device 33. Movement of the sample side is performed by presenting a drive signal from the X drive controller 46 and Y drive controller 47 to the XY stage 14 of the sample stage 11.

The XY micromotion mechanism 29 is formed using a piezoelectric element, and is capable of performing high-precision, high-resolution scanning movement. Since the range measured by XY scanning with the XY micromotion mechanism 29 is limited by the stroke of the piezoelectric element, this range is determined by a maximum range of about 100 µm. XY scanning by the XY micromotion mechanism 29 achieves micro-range measurement. Since the abovementioned XY stage 14 is usually formed using an electromagnetic motor as the drive unit, the stroke thereof can be increased to a few hundred millimeters. Wide-area measurement is achieved by XY scanning with the XY stage.

Control is performed so that the curvature (amount of deformation due to bending and the like) of the cantilever 21A becomes constant based on the feedback servo control loop while the prescribed measurement area on the surface of the sample 12 is scanned by the probe 20 as described above. Control is performed so that the curvature of the cantilever 21A always matches the reference target curvature (set by the reference voltage Vref). As a result, the distance between the probe 20 and the surface of the sample 12 is kept constant. The probe 20 therefore moves (scans) while tracing the minute irregular shape (profile) of the surface of the sample 12, for example, and the minute irregular shape of the surface of the sample 12 can be measured by obtaining the height signal of the probe.

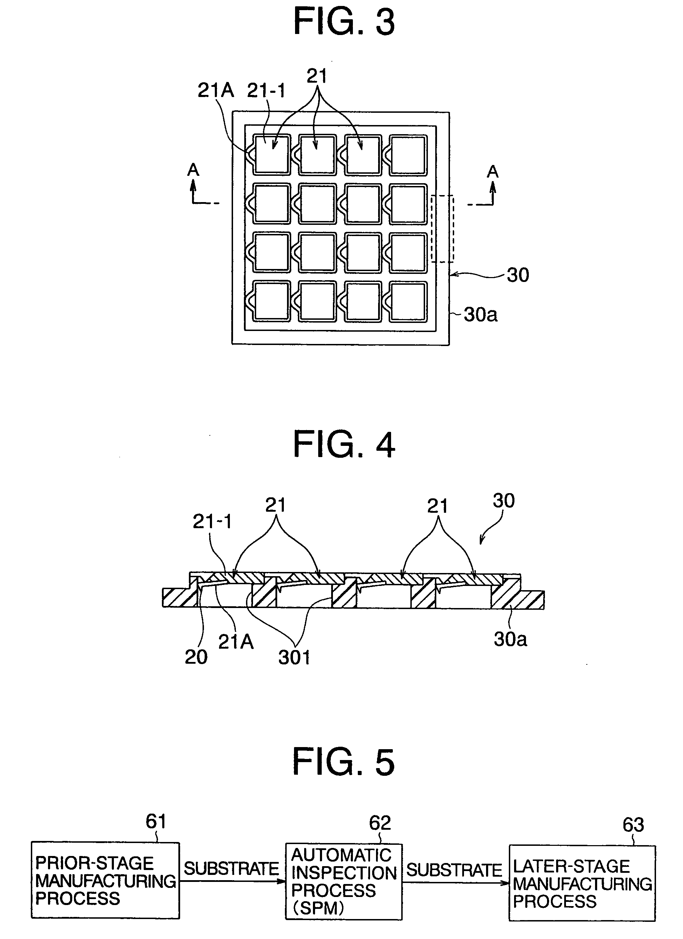

A specific example of the structure of the aforementioned cantilever cassette 30 will next be described according to Figs. 3 and 4. Fig. 3 is a plan view, and Fig. 4 is a sectional view along line A-A in Fig. 3.

The planar shape of the cantilever cassette 30 is square, for example, and the profile shape thereof is created by a flat plate-shaped member having the desired thickness. The cantilever cassette 30 has a cassette stand 30a, and is formed from a plastic material, a resin material, metal, or the like having a prescribed material strength and precision. Receptacles (concavities) in which sixteen cantilever units 21, for example, are placed are formed on the top surface of the cassette stand 30a. The planar shape of the cantilever holder 21-1 is preferably square, and has a comparatively large surface area. As is apparent from Fig. 4, the cantilever 21A is attached to the bottom surface of the front portion of the cantilever holder 21-1, and the cantilever 21A and cantilever holder 21-1 are placed so that the distal end of the probe 20 points downward. A cantilever holder 21-1 is stored in each of the sixteen receptacles formed in the top surface of the cassette stand 30a, and the cantilever holders are arranged with a constant precision in the same orientation and in the same direction.

Through-holes 301 are preferably formed in the bottom portion that corresponds to the concavity in which the cantilever holder 21-1 is accommodated in the cassette stand 30a. The number of through-holes 301 formed corresponds to the number of cantilever units 21 stored in the cantilever cassette 30. The through-holes 301 may also be depressions.

The manufactured cantilever units 21 (probes 20) and cantilever cassette 30 are each given a manufacturing number, and the cantilever units 21 are arranged in the cantilever cassette 30 in a prescribed sequence. It is therefore possible to manage data relating to the cantilever units 21 stored in each cantilever cassette 30.

The cantilever cassette 30 is disposed in two cassette installation ports 302 and 303, for example, in the sample stage 11 shown in Fig. 2. In the sample stage 11, the position of each cantilever unit 21 of the cantilever cassette 30 placed in the cassette installation ports 302 and 303 is managed by the second control device 34 based on the aforementioned coordinate system.

The scanning probe microscope having the configuration described above is incorporated as an automatic inspection step 62 for inspecting a substrate (wafer) in an intermediate stage, for example, of an in-line manufacturing apparatus for a semiconductor device (LSI), as shown in Fig. 5, for example. The substrate (sample 12) to be inspected is transported from the previous manufacturing process step 61 by a substrate transporting device not shown in the drawing, and is placed on the substrate holder 16 of the scanning probe microscope (SPM) of the automatic inspection process 62. The minute irregular shape of a prescribed area of the substrate surface is then automatically measured by the scanning probe microscope, and it is determined whether the sample meets the specifications of the previous substrate manufacturing process. The sample is then transported again by the substrate transporting device to the subsequent manufacturing process step 63.

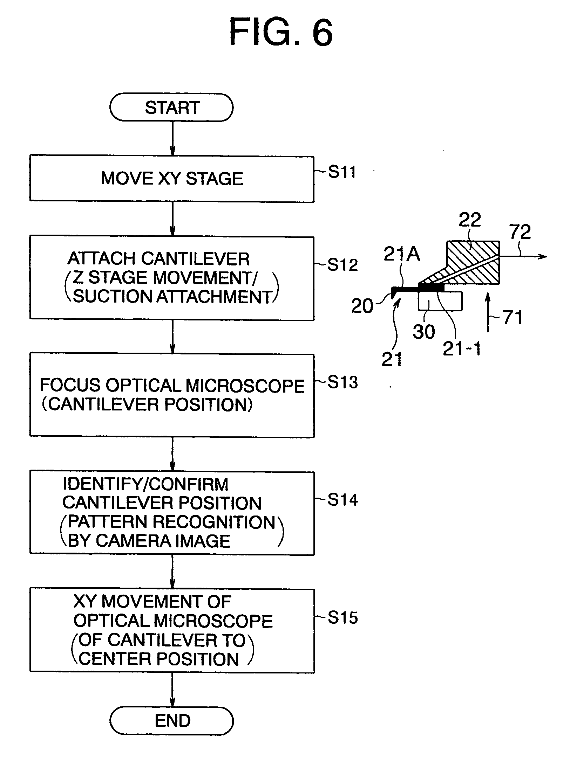

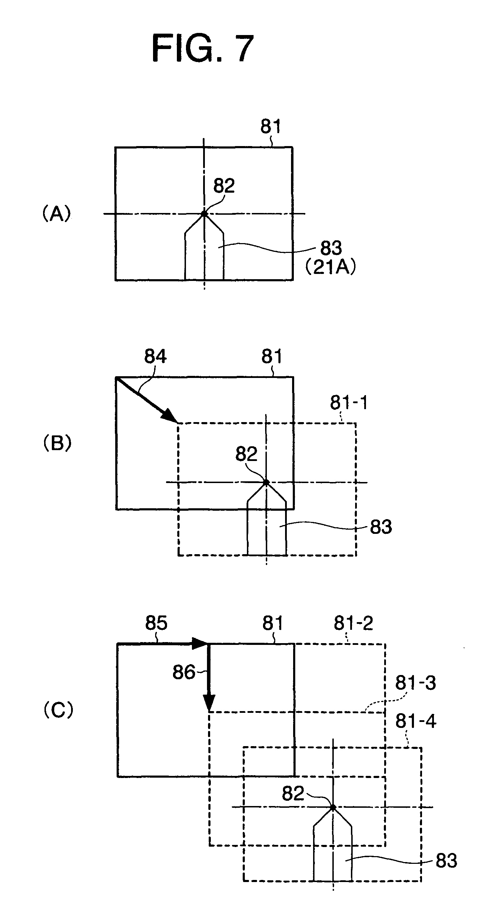

The probe replacement method according to the scanning probe microscope based on the first embodiment will next be described with reference to the aforementioned drawings and Figs. 6 and 7. Fig. 6 shows the procedure for attaching a new prescribed cantilever unit 21 to the mount 22 after a cantilever unit 21 whose probe is worn due to continuous automatic measurement for a prescribed time is installed in the cantilever cassette 30. The process whereby the cantilever unit 21 is removed from the mount 22 and placed in the prescribed receptacle of the cantilever cassette 30 is not shown in the drawing. The cantilever cassette 30 is moved to a position under the mount 22 by the XY stage 14. Fig. 7 shows the state of positioning performed in the field of view of the optical microscope 18. This positioning corresponds to the routines in steps S13 through S15 of Fig. 6. In this probe replacement method, positioning is performed by moving the optical microscope 18 as the observation device with the XY-direction movement mechanism 17b of the drive mechanism 17.

The procedure for attaching the new cantilever unit 21 to the mount 22 will be described according to Fig. 6.

In the first step S11, the XY stage 14 is driven, and the cantilever cassette 30 is moved. In this movement, the position of each cantilever unit 21 in the cantilever cassette 30 is confirmed in advance based on coordinate management, and the position of the cantilever cassette 30 is moved with respect to the mount 22 so that the pre-set prescribed cantilever unit 21 is selected.

The selected cantilever unit 21 is then attached to the mount 22 (step S12). In this attachment, the Z stage 15 is driven, the cantilever holder 21-1 of the selected cantilever unit 21 is brought into contact with the mount 22 as indicated by the arrow 71 in Fig. 6, vacuum attachment (arrow 72) to the mount 22 is performed based on the command signal s4 from the mounting controller 49, and the cantilever holder 21-1 is attached to the mount 22. A new cantilever unit 21 is mounted on the mount 22 in this manner.

When the cantilever unit 21 has been attached to the mount 22, the optical microscope 18 is moved by the XY-direction movement mechanism 17b, focal point alignment is performed by the Z-direction movement mechanism 17a, and the focal point of the objective lens 18a of the optical microscope 18 is aligned with the cantilever 21A of the cantilever unit 21 (step S13). The focal point is aligned only at the attachment position, and this alignment can be performed by a single positioning operation.

In the next step S14, the position of the cantilever unit 21 thus attached is recognized and confirmed. The image from the optical microscope 18 is captured by the TV camera 19, and the position of the cantilever 21A of the cantilever unit 21 is identified and recognized in this routine.

Since an error is included in the attachment position with regard to the image obtained by the optical microscope 18, the optical microscope 18 is moved by the XY-direction movement mechanism 17b, and the position of the cantilever 21A image in the field of view of the optical microscope 18 is set to a prescribed position. At this time, storing a cantilever attachment position error that corresponds to the amount of movement of the optical microscope 18 allows this value to be used to correct the XY coordinate value as needed during measurement.

Fig. 7 shows the field of view of the optical microscope 18 used to describe the final position adjustment according to steps S13 through S15.

Fig. 7A shows an image of the field of view 81 in which the cantilever holder 21-1 of the cantilever unit 21 is correctly attached to the mount 22 in ideal fashion. In this case, the probe 20 in the image (83) of the cantilever 21A is set in the center position 82 of the field of view 81 of the optical microscope 18.

When there is an error in the attachment position in the field of view of the optical microscope 18 obtained in step S14, the field of view 81 state shown in Fig. 7B occurs. The image 83 of the cantilever 21A is assumed to be within the field of view 81. When step S15 is executed in this case, the field of view 81 is moved to the location indicated by the reference numeral 81-1 as shown by the arrow 84, whereby the distal end position of the image 83 of the cantilever 21A is set so as to arrive at the center position 82 of the field of view 81-1. In this case, the field of view 81 side is moved by moving the optical microscope 18 side. The cantilever position is also detected in this case by pattern recognition or another method, and the abovementioned setting is performed.

Fig. 7C shows a condition in which the mounting error is large, and the image 83 of the cantilever 21A is outside the field of view 81. In this case, the image 83 of the cantilever 21A is retrieved based on a prescribed search algorithm obtained using an empirical rule, or by appropriate setting. Half of the field of view 81 in this case is moved to the right, for example (arrow 85), to give the field of view 81-2. When the image 83 of the cantilever 21A still cannot be observed, half of the field of view is moved in the vertical direction (arrow 86) to give the field of view 81-3. In this state, since the image 83 of the cantilever 21A is observable within the field of view 81-3, the image 83 is set in the center position 82 of the field of view 81-4 by the same method described above. The field of view may, of course, be switched according to the necessary level of precision.

Alignment of the image center of the field of view with the distal end position of the image of the cantilever 21A in the optical microscope 18 field of view obtained by the TV camera 19 may be performed with the assumption that the image center of the field of view and the distal end position of the image of the cantilever 21A are in the adjustable range with respect to the hypothetical center determined by the mounting error and the like of the photosensor (PD) and the laser light source (LD) 26 of the cantilever displacement detector 24.

As described above, the attachment/mounting of the probe replacement method according to the first embodiment shown in Fig. 6 is not system in which the position is finely adjusted before attachment according to steps S11 through S15, but is rather a system of fine adjustment by moving the optical microscope 18 side after the cantilever holder 21-1 of the cantilever unit 21 is attached to the mount 22. Therefore, reattachment does not occur even when error occurs in the cantilever 21A mounted on the mount 22. Probe replacement can therefore be performed with high precision in a shorter time by the probe replacement method of the present embodiment than by the conventional probe replacement method.

In the embodiment described above, correction of mounting error was performed by an optical microscope, but this correction may also be performed by moving the cantilever side.

When in-line automatic measurement is performed, a prescribed area of the sample 12 is automatically measured. The positional relationship between the probe and the sample is important in this case, but the amount of movement of the optical microscope 18 becomes an indicator of the corresponding positional relation in this method, and coordinate management can be performed extremely easily.

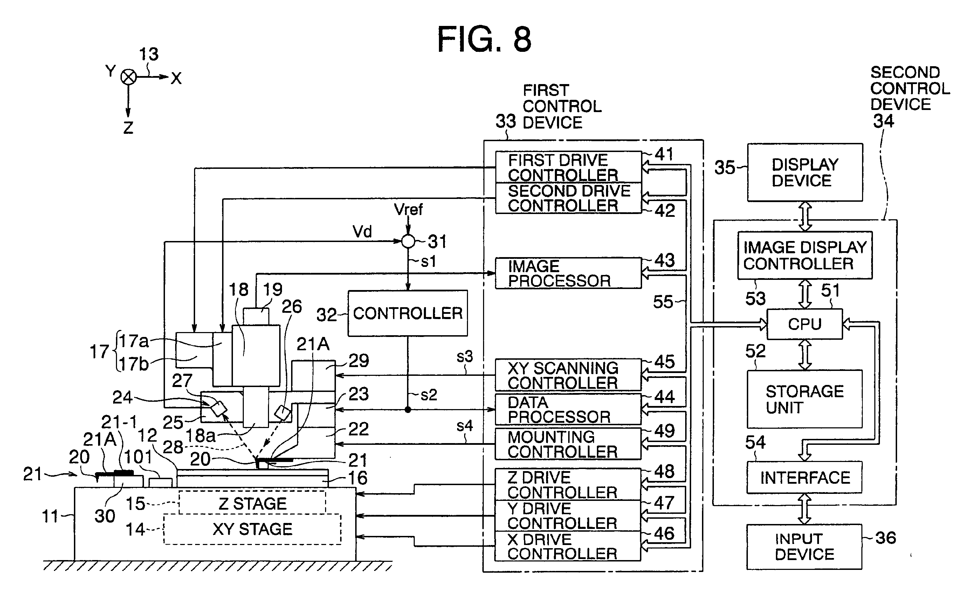

A second embodiment of the present invention will next be described with reference to Figs. 8 through 19. In this second embodiment, a method is proposed whereby the attachment position of the cantilever unit 21 is finely adjusted, and positional adjustment is performed by applying force from a prescribed direction to the cantilever attached to the mount 22 by vacuum attachment, and moving the cantilever unit side when a new cantilever unit 21 is attached to the mount 22 in the automatic probe replacement method for a scanning probe microscope.

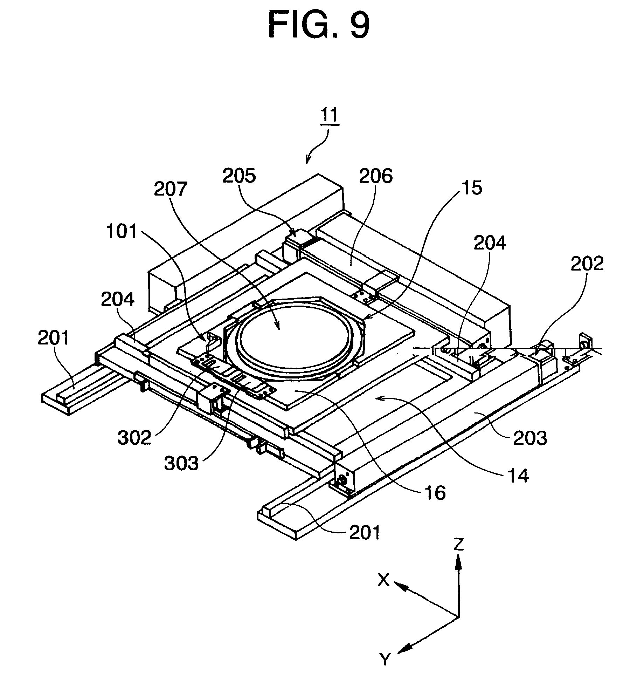

Fig. 8 corresponds to Fig. 1 of the first embodiment, and Fig. 9 corresponds to Fig. 2 of the first embodiment. The same reference numerals are used in Fig. 8 for constituent elements that are the same as those described in Fig. 1, and the same reference numerals are used in Fig. 9 for constituent elements that are the same as those described in Fig. 2. Description of details already described is omitted, and only the characteristic structure is described.

In Figs. 8 and 9, a positioning mechanism 101 is provided near the sample holder 16 in the top surface of the sample stage 11, for adjusting/setting the attachment position of the mount 22 when the cantilever holder 21-1 of the cantilever unit 21 is attached to the mount 22 by vacuum attachment. The positioning mechanism 101 is provided as an alignment port on the sample stage 11.

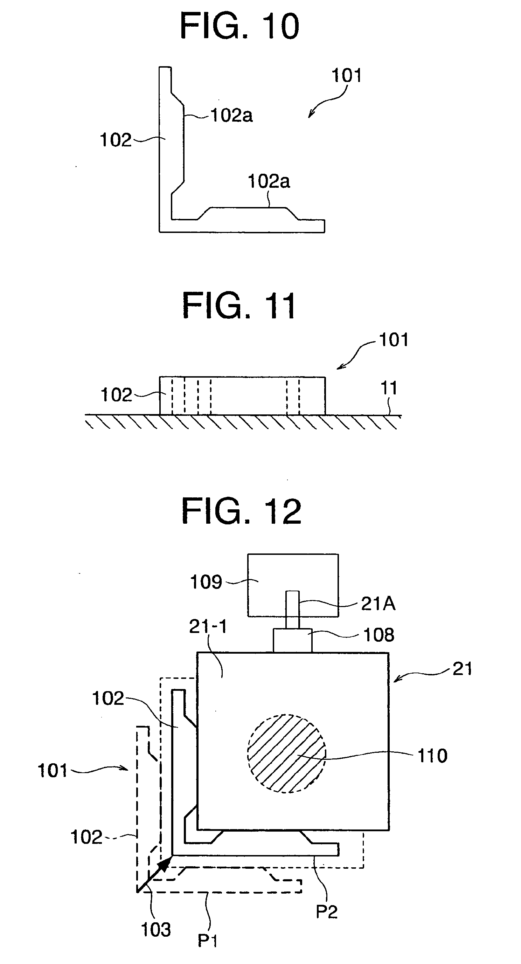

A magnified view of the positioning mechanism 101 is shown in Figs. 10 through 12. Fig. 10 shows a plan view of the positioning mechanism 101; Fig. 11 shows a side view thereof; and Fig. 12 shows a plan view of the manner in which alignment is performed. The positioning mechanism 101 is formed by an L-shaped pushing member 102 having two reference surfaces 102a whose shape conforms to a reference surface set by the cantilever holder 21-1 of the cantilever unit 21. This pushing member 102 is a member having an L-shape that is bent at a substantially right angle. The reference surfaces 102a are formed on the inside of the pushing member 102. The pushing member 102 is fixed to the top surface of the sample stage 11 as shown in Fig. 11. When the sample stage 11 is moved in the X, Y, and Z directions by the XY stage 14 and the Z stage 15 of the sample stage 11, the pushing member also moves in accordance with the operation of the sample stage 11. Therefore, the movement operation of the positioning mechanism 101, specifically, the movement operation of the pushing member 102, is performed in conjunction with the movement operation of the sample stage 11.

The two reference surfaces 102a of the pushing member 102 of the positioning mechanism 101 are in contact with the side surfaces of the edges on the left side and bottom side in Fig. 12 of the cantilever holder 21-1 of the cantilever unit 21, as shown in Fig. 12. In this case, the side surfaces of the edges on the left side and bottom side in Fig. 12 of the cantilever holder 21-1 of the cantilever unit 21 are set as reference surfaces.

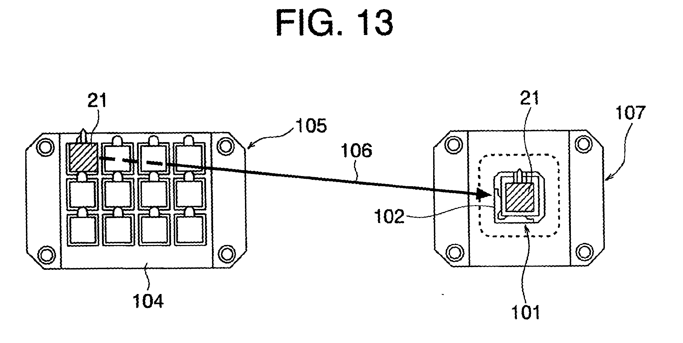

With the new cantilever unit 21 vacuum-attached to the mount 22, the sample stage 11 performs the movement operation, and the cantilever unit 21 is set in an area of the positioning mechanism 101 as shown in Fig. 12. This movement state is shown in Fig. 13.

In Fig. 13, the reference numeral 104 indicates another form of the cantilever cassette, and 105 indicates the cassette stand. The structures of the cantilever cassette 104 and the cassette stand 105 are essentially the same as those of the previously described cantilever cassette 30 and cassette stand 30a. Twelve cantilever units 21 are arranged in the cantilever cassette 104. The one cantilever unit 21 on the left end of the top level therein is attached to the mount 22, is moved to the location of the positioning mechanism 101 in the alignment port 107 as indicated by the arrow 106, and is set in the prescribed positional relationship.

In the set state described above, as shown in Fig. 12, the pushing member 102 is moved by the positioning mechanism 101 as indicated by the arrow 103 from the position P1 indicated by the dashed line to the position P2 indicated by the solid line based on the movement of the sample stage 11, whereupon the cantilever holder 21-1 is pushed. It thereby becomes possible to adjust the position of the cantilever unit 21 with respect to the mount 22. The cantilever unit 21 is fixed to the mount 22, but this fixing force allows for positional adjustment based on the vacuum attachment effect.

In Fig. 12, the reference numeral 108 indicates a silicon base, and 21A indicates the aforementioned lever member; or, strictly speaking, the cantilever. The reference numeral 109 indicates the area of the field of view of the optical microscope 18, and 110 indicates the suction area of the mount 22. Other structural aspects are essentially the same as those described in Figs. 1 and 2.

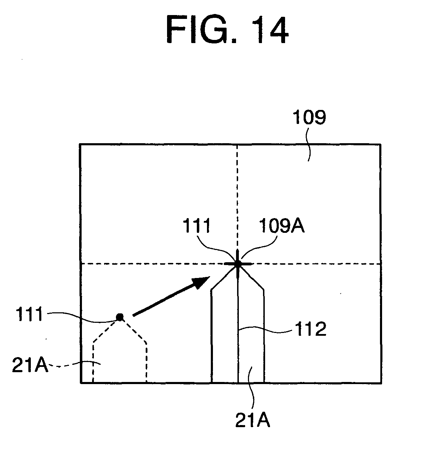

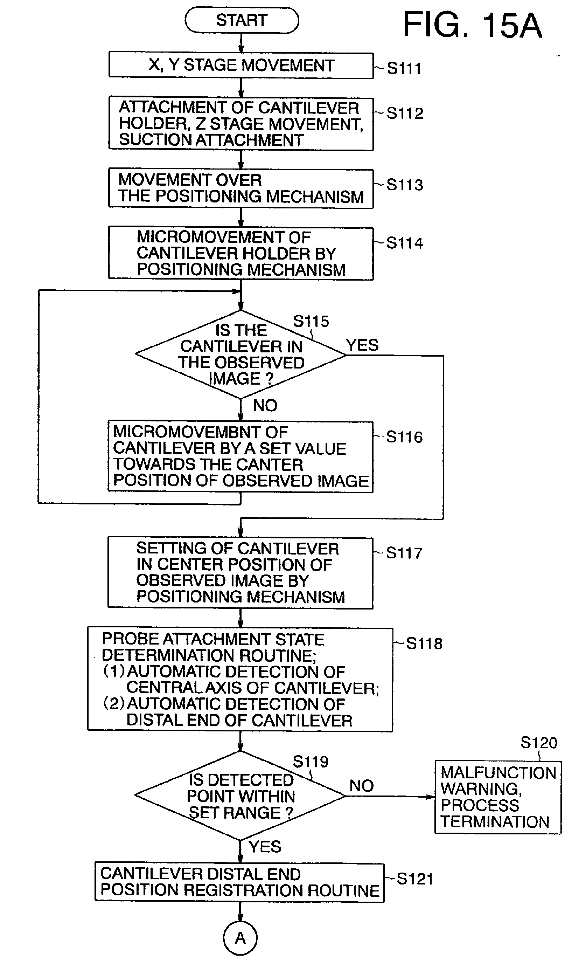

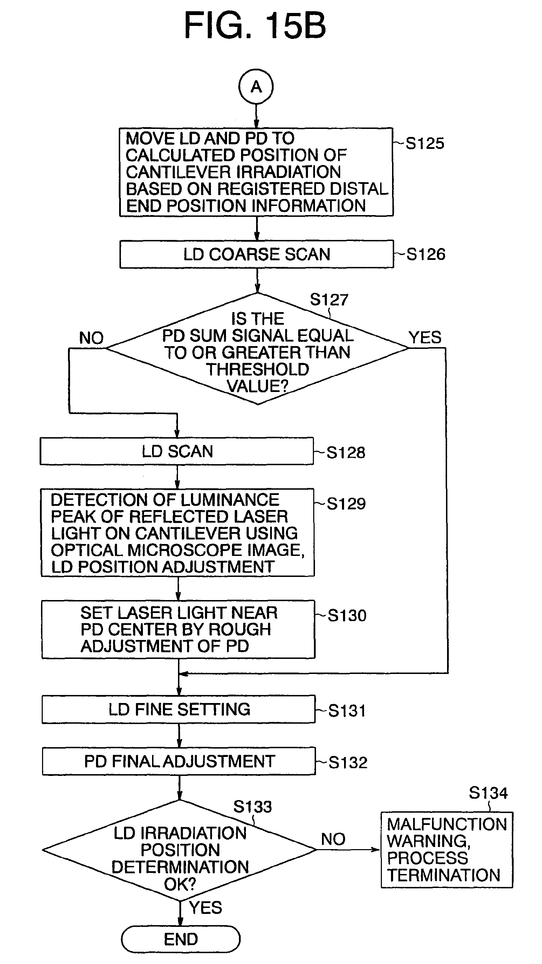

The probe replacement method for a scanning probe microscope according to the second embodiment will next be described with reference to Figs. 8 through 13 described previously, as well as Fig. 14 and Figs. 15A and 15B. Fig. 14 is a magnified view of the field of view 109; and Figs 15A and 15B show the procedure whereby a new prescribed cantilever unit 21 is automatically attached to the mount 22 after a cantilever unit 21 having a probe 20 that is worn by use in measurement is placed in the cantilever cassette 30.

The steps for removing the spent cantilever unit 21 from the mount 22 and placing the cantilever unit in the prescribed receptacle of the cantilever cassette 30 are not shown in the drawing. The XY stage 14 moves the cantilever cassette 30 into position below the mount 22. Fig. 14 shows the manner in which alignment is performed in the field of view 109 of the optical microscope 18. In this probe replacement method, the pushing member 102 of the positioning mechanism 101 is moved by the XY stage 14, whereby the reference surface of the cantilever holder 21-1 is pushed by the reference surfaces 102a of the pushing member 102, the relative positioning of the cantilever holder 21-1 and the mount 22 is changed, and the distal end 111 of the cantilever 21A is aligned with the center point 109A of the field of view 109 of the optical microscope 18.

The procedure for attaching the new cantilever unit 21 to the mount 22 will be described according to Figs. 15A and 15B. Figs. 15A and 15B also show sequences of a flowchart linked together by a connector.

In the first step S111, the XY stage 14 is driven, and the cantilever cassette 30 is moved. By this movement, the positions of the cantilever units 21 in the cantilever cassette 30 are confirmed in advance based on coordinate management, and the position of the cantilever cassette 30 is moved with respect to the mount 22 so that a pre-set prescribed cantilever unit 21 is selected.

The attachment position set in step S111 may be within an attachment range in subsequent steps that adequately incorporates sufficient adjustment margin to perform the positioning steps S114 through S117 for adjusting the relative positions of the cantilever holder 21-1 and the mount 22, and the error in the attachment position due to variations in the position in which the cantilever units 21 are accommodated in the cantilever cassette 30.

The new cantilever unit 21 thus selected is then attached to the mount 22 (step S112). In this attachment operation, the Z stage 15 is driven, and the cantilever holder 21-1 of the selected cantilever unit 21 is brought into contact with the mount 22 by a spring mechanism, a sensor (not shown in the drawing), and the like as indicated by the aforementioned arrow 71 in Fig. 6. Attachment to the mount 22 by vacuum suction (arrow 72 in Fig. 6) is also performed based on the command signal s4 from the mounting controller 49, and the cantilever holder 21-1 is caused to adhere to the mount 22. The cantilever unit 21 is thereby mounted on the mount 22.

In step S113, with the cantilever unit 21 attached to the mount 22, the Z stage 15 is lowered, after which the XY stage 14 is driven and the positioning mechanism 101 is moved to the underside of the mount 22. The position to which the positioning mechanism is moved is the coordinate position obtained by calculating the range of attachment error with which the cantilever unit 21 is attached, the pushing margin of the positioning mechanism 101, and the like.

When the positioning mechanism 101 has moved relative to the cantilever unit 21 and reached the location of the coordinate position thus calculated, the Z stage 15 is raised until the reference surfaces 102a of the pushing member 102 in the positioning mechanism 101 is sufficiently high that the reference surfaces of the cantilever holder 21-1 can be pushed, and until the bottom surface of the cantilever holder 21-1 is no longer in contact with the pushing member 102.

In step S114, the XY stage 14 is driven a prescribed amount with the reference surfaces 102a of the pushing member 102 of the positioning mechanism 101 oriented towards the reference surface of the cantilever holder 21-1, and movement (micro-movement) is performed over a minute distance in the X-axis and Y-axis directions. When the cantilever holder 21-1 and the reference surfaces 102a of the pushing member 102 make contact at this time, the relative positional relationship between the mount 22 and the cantilever holder 21-1 attached by vacuum to the mount 22 changes due to the mechanical pushing force of the pushing member 102.

In step S115, the relative positions of the cantilever holder 21-1 and the mount 22 change, and when the image of the cantilever 21A appears in the field of view of the optical microscope 18, image processing is performed for the image of the cantilever 21A acquired by the optical microscope 18, and the position of the distal end 111 of the cantilever 21A is detected. In step S116, the XY stage 14 is driven and the positioning mechanism 101 is moved a minute amount towards the center point 109A of the field of view 109 of the optical microscope 18 while the detected coordinates are referenced, and is set so that the position of the distal end 111 of the cantilever 21A coincides with the position of the center point 109A of the field of view 109 (step S117).

When the image of the cantilever 21A cannot be detected within the field of view of the optical microscope 18 even when the XY stage 14 is driven, and the positioning mechanism 101 is moved a certain amount, the positioning mechanism 101 is moved to the position at which the distal end 111 of the cantilever 21A is set at the center point 109A of the field of view 109 of the optical microscope 18, by driving the XY stage 14 on the basis of pre-acquired mechanical dimension information for the portion in which the cantilever 21A is supported by the cantilever holder 21-1. In order for this operation to be effective, the free end of the cantilever 21A is mechanically supported in a position that is within a prescribed range of precision.

When the new cantilever unit 21 is mounted on the mount 22 based on steps S114 through S117 described above, the process whereby the position of the distal end 111 of the cantilever 21A is set in the position of the center point 109A of the field of view 109 of the optical microscope 18 is completed.

In step S118, recognition and confirmation of the state in which the cantilever 21A positioned in the center point 109A of the field of view 109 of the optical microscope 18 is attached to the mount 22 are performed using pattern recognition and other types of image processing. The positions of the central axis 112 (shown in Fig. 14) and distal end 111 of the cantilever 21A are detected from the image, and it is recognized and confirmed whether the position coordinates of the central axis 112 and distal end 111 thus detected are within the set prescribed range (determination step S119). The field of view may be changed, and a prescribed function may be implemented in the procedure described above.

When the result of the determination step S119 is NO, a malfunction warning is generated or the process is terminated (step S120). When the result of the determination step S119 is YES, the process proceeds to the next step S121.

In the determination step S119, the image of the cantilever 21A may not be in the field of view 109 of the optical microscope 18, or the image may be in the field of view 109 but the detected coordinate position of the central axis 112 or distal end 111 of the cantilever 21A may still not be within the prescribed range. Some possible causes are that the cantilever unit 21 has fallen off, there is a defect in the attachment of the cantilever 21A to the cantilever holder 21-1, the cantilever 21A is bent, or some other mishap has occurred. In such cases, the automatic attachment routine for the probe is interrupted (step S120). A damaged or otherwise defective cantilever unit 21 can thereby be automatically detected.

In the next step S121, when the detected coordinate position of the central axis 112 or distal end 111 of the cantilever 21A is within the set prescribed range, a registration routine is performed for registering this coordinate value in the system. This registration routine is performed each time a cantilever unit is replaced.

The distal end registration routine and the process for determining the state in which the cantilever unit 21 is attached to the mount 22 are completed by steps S118 through S121 described above.

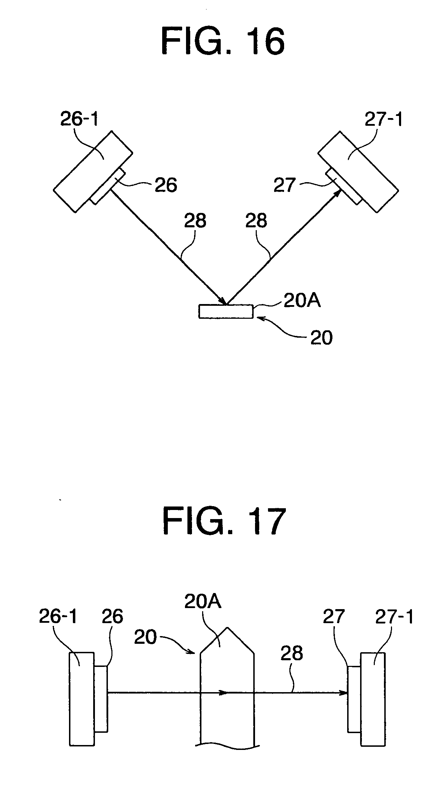

The procedure for performing automatic adjustment of the optical axis in the aforementioned optical-lever optical detection device will next be described according to Figs. 16 through 19 and steps S125 through S133 shown in Fig. 15B of the subsequent stage.

Fig. 16 is a schematic diagram of the optical system having the laser light source 26 and the photosensor 27 as viewed from the side of the free end of the cantilever 21A. Fig. 17 is a schematic diagram of the same optical system as viewed from the observation direction of the optical microscope 18.

The laser light source 26 is supported specifically by a movement mechanism 26-1 that is capable of moving the laser light source 26 in the direction of the plane that is perpendicular to the optical axis of the laser light 28. This configuration makes it possible to change the position in which the laser light 28 is radiated on the back surface of the cantilever 21A.

The photosensor 27 is supported specifically by a movement mechanism 27-1 that is capable of moving the photosensor 27 in the direction of the plane that is parallel to the detection surface. This configuration makes is possible to change the detection position of the photosensor 27.

The movement mechanism 26-1 of the laser light source 26 and the movement mechanism 27-1 of the photosensor 27 are driven using the coordinate position data of the central axis 112 and distal end 111 of the cantilever 21A registered in step S121, and the positions of the laser light source (indicated as "LD" in the drawing) 26 and the photosensor (indicated as "PD" in the drawing) 27 are adjusted (step S125). The position of the laser light source 26 is set to the irradiation position calculated for the laser light, which changes according to the type of cantilever 21A. The position of the photosensor 27 is set to the light-receiving position calculated for the laser light reflected from the surface of the cantilever 21A.

In the next step S126, the movement mechanism 26-1 is driven, the position of the laser light source 26 is changed, and the irradiation position of the laser light is scanned within the calculated target range of laser light irradiation of the cantilever 21A. This scanning operation is performed in the width direction perpendicular to the central axis 112 for the back surface of the cantilever 21A.

In the next determination step S127, the output signal Vd of the photosensor 27 is monitored, and it is determined whether the output signal is equal to or greater than a pre-set prescribed value. Since the light-receiving surface of the photosensor 27 is divided into four parts, the output signal Vd of the photosensor 27 is outputted as a signal that is the sum of the signals from the four light-receiving areas. The process proceeds to step S131 when the output signal Vd is equal to or greater than the prescribed value, and the process proceeds to the next step S128 when the output signal Vd is less than the prescribed value. The detailed setting routine for the laser light source 26 is executed in step S131.

The process made up of steps S128 through S130 is an automatic adjustment process carried out when the actual optical axis of the laser light 28 differs from the calculated optical axis of the laser light due to variations in the shapes of the cantilevers 21A, or for another reason. In this automatic adjustment process, the movement mechanism 26-1 is first driven while the image of the optical microscope 18 and the output signal Vd of the photosensor 27 are monitored, and the irradiation position of the laser light emitted from the laser light source 26 is changed so that the laser light is radiated on the periphery of the coordinate position of the central axis 112 and distal end 111 of the cantilever 21A detected as described above (step S128). Coarse adjustment of the position of the laser light source 26 is then performed so that the laser light irradiation point on the cantilever 21A has the maximum luminance in the optical microscope 18 image (step S129). Lastly, the movement mechanism 27-1 is driven, and the position of the photosensor 27 is adjusted (step S130).

In the process made up of steps S131 and S132, the movement mechanism 26-1 is driven and the irradiation position of the laser light emitted from the laser light source 26 is controlled by monitoring the image from the optical microscope 18 and the output signal Vd of the photosensor 27 (step S131). The movement mechanism 27-1 is then driven, the position of the photosensor 27 is changed, and fine adjustment is performed so that the surface in which the laser light is received in the photosensor 27 is in the center position of the photosensor 27 (step S132).

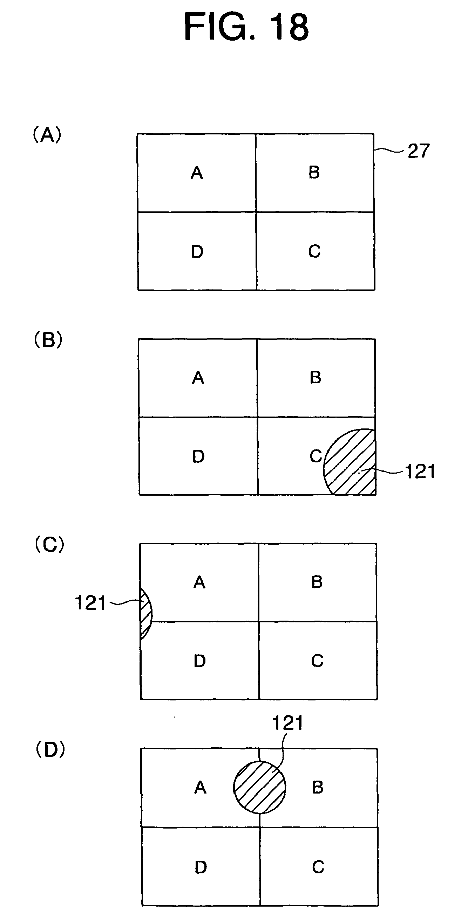

The method for bringing the light-receiving position of the laser light 28 into the center position of the photosensor 27 when the laser light emitted from the laser light source 26 is reflected on the back surface of the cantilever 21A and received by the photosensor 27 will be described with reference to Fig. 18.

Fig. 18A is a diagram of the photosensor 27 as viewed from the surface in which the laser light is received. The photosensor 27 is divided into four light-receiving elements A, B, C, and D. The light-receiving elements of the photosensor 27 are provided with a mechanism for outputting a reception signal according to the energy of the laser light when the laser light is received.

The aforementioned state in which the output signal Vd is equal to or greater than a prescribed value is a state in which any of the light-receiving elements of the photosensor 27 receives laser light (laser spot 121) that is equal to or greater than a prescribed value, as shown in Fig. 18B. The aforementioned state in which the output signal Vd is less than a prescribed value is a state in which the energy of the laser light (laser spot 121) received is smaller than a prescribed value, as shown in Fig. 18C.

In order for the position information of the laser light received in the light-receiving surface to be known, the photosensor 27 computes {(A + D) - (B + C)}, referred to as the difference signal, {(A + B) - (D + C)}, referred to as the friction signal, and (A + B + C + D), referred to as the sum signal, for each output voltage of the reception signals of the light-receiving elements A through D.

It is apparent that when, for example, the difference signal and the friction signal are computed in the laser light-receiving state shown in Fig. 12D, the laser light-receiving point (laser spot 121) can be computed, and it is understood that the movement mechanism 27-1 can be driven and the laser light-receiving point can be set to the center point of the photosensor 27.

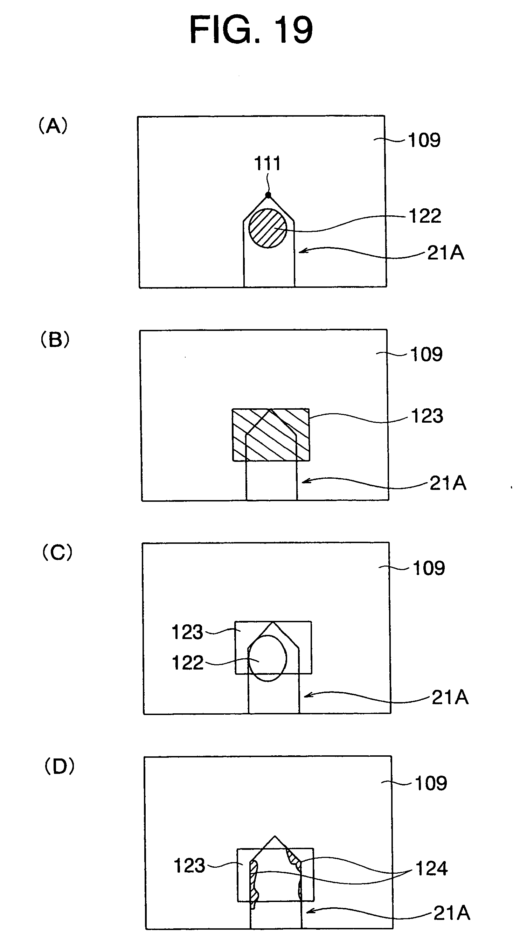

The determination step S133 will next be described. The determination step S133 is a step for ultimately confirming whether the optical axis of the laser light 28 that has been set as described above is in the proper position of the cantilever 21A by using image processing of the image obtained by the optical microscope 18 and the TV camera 19. The step for confirming whether the laser light 28 is being radiated to the pre-set proper position on the cantilever 21A will be described with reference to Fig. 19.

Fig. 19 shows the field of view of the optical microscope 18 for showing the confirmation of the final position obtained by the optical axis adjustment performed in steps S125 through S132.

Fig. 19A shows a state in which the laser light 28 is radiated in the proper position on the cantilever 21A. The spot 122 is the reflection image of the laser light 28. A state in which the laser light 28 is radiated in the proper position on the cantilever 21A is defined as a state in which the center point of the laser light irradiation is near the central axis of the cantilever on the cantilever 21A and is in a position that is as near as possible to the distal end position 111.

As shown in Fig. 19B, a laser irradiation range window 123 is provided for detecting the proper position of laser light irradiation on the cantilever 21A within the field of view 109 of the optical microscope 18.

As shown in Fig. 19C, the total surface area of the portion irradiated by the laser light on the cantilever 21A is first found by segmentation of the image luminance information or another method using the entire field of view of the optical microscope 18, the surface area of the portion irradiated by laser light in the image processing window 123 is then found, and the ratio of these areas is computed. The ratio of laser light radiated within the proper irradiation range in the entire surface area is thereby found. When the ratio thus found is equal to or greater than a prescribed value, the laser light 28 is assumed to be radiated in the proper position on the back surface of the cantilever 21A.

By the method described above, even when the reflected luminance is irregular due to the type or individual surface shape of the cantilever 21A, or only edge portions 124 such as those shown in Fig. 19D reflect due to the shape of the cantilever 21A, the irradiation position of the laser light 28 can be properly detected. This technique ultimately enables automatic adjustment of the optical axis of the laser light 28 in the optical system. When the result of the determination step S133 is YES, the automatic probe replacement operation is ended, and when the result is NO, the step S134 is executed to generate a malfunction warning or terminate the process.

As described above, the abovementioned steps in the attachment/mounting of the cantilever unit and automatic adjustment of the optical axis in the probe replacement method shown in Figs. 15A and 15B do not constitute a method for finely adjusting the position prior to attachment. The abovementioned steps instead constitute a method for attaching the cantilever holder 21-1 to the mount 22, and then finely adjusting the position of the cantilever holder 21-1 with respect to the mount 22 using the pushing member 102 of the positioning mechanism 101.

Furthermore, this method adjusts the optical axis automatically using the coordinates of the positions of the central axis 112 and distal end 111 of the cantilever 21A that are reliably found using the positioning mechanism 101. This adjustment was performed manually in the past.

Because of the configuration described above, reattachment does not occur even when an error occurs in the cantilever unit 21 mounted on the mount 22. High-precision probe replacement can therefore be performed by the automatic probe replacement method of the second embodiment in less time than by the conventional probe replacement method.

A prescribed area of the sample 12 is automatically measured when in-line automatic measurement is performed. The relative positions of the probe and the sample are important in this case, but since the positional coordinates of the distal end and central axis of the cantilever 21A are uniquely determined by the present method, the coordinates can be managed extremely easily.

In the aforementioned second embodiment, the shape of the pushing member 102 of the positioning mechanism 101 or the pushing direction thereof with respect to the cantilever holder may be freely modified.

An optical microscope was used for wide-area observation in the foregoing description of the embodiments, but scanning electron microscopes, laser microscopes, and various other types of devices may also be used.

The structures, shapes, sizes, and relative positions described in the above embodiments are described schematically to an extent sufficient to enable understanding and implementation of the present invention, and the numerical values and compositions (materials) in each configuration are given only by way of example. The present invention is therefore in no way limited by the embodiments described below (*5), and various modifications thereof are possible in a range that does not depart from the technological scope of the present invention as represented in the claims.

### INDUSTRIAL APPLICABILITY

The present invention is used to automatically perform replacement of a worn probe, replacement with a different type of probe, or mounting or the like in equipment setup or the like in a short time and with mounting that has highly precise positioning in a scanning probe microscope for continuously measuring a large number of samples in sequence.

## Claims

1. A probe replacement method for a scanning probe microscope comprising:
a cantilever (21) provided so that a probe (20) faces a sample (12), and a measurement unit (24, 31, 32) for measuring a physical quantity generated between said probe and said sample when said probe scans the surface of said sample in a configuration in which the surface of said sample is scanned with said probe and the surface of said sample is measured while said physical quantity is kept constant by the measuring unit, and further comprising:
a cantilever mount (22) provided with a mechanism for attaching and detaching said cantilever (21), a cantilever storage unit (30) for storing a plurality of cantilevers, first movement means (11) for moving the position of said cantilever storage unit, and observation means (18 and 19) for observing the position of the mounted cantilever, said method **characterized in** comprising:
steps (S11, S12; S111, S112) for aligning said cantilever mount (22) and said cantilever storage unit (30) using said first movement means (11), selecting one cantilever from said cantilever storage unit, and mounting the cantilever on said cantilever mount; and
steps (S13, S14, S15; S114 through S117) for setting said mounted cantilever in a prescribed position in the field of view of said observation means (18, 19) after the cantilever is mounted.

2. The probe replacement method for a scanning probe microscope according to claim 1, **characterized in that** said cantilever is set to a prescribed position in the field of view of said observation means by moving said observation means using second movement means (17).

3. The probe replacement method for a scanning probe microscope according to claim 1, **characterized in that** said cantilever is set to a prescribed position in the field of view of said observation means by moving said cantilever using a positioning mechanism (101) moved by said first movement means (11).

4. The probe replacement method for a scanning probe microscope according to any of claims 1 through 3, **characterized in that** said observation means is an optical microscope (18), pattern recognition is performed using an image obtained by the optical microscope, and the mounting position of said mounted cantilever is specified.

5. The probe replacement method for a scanning probe microscope according to any of claims 1 through 4, **characterized in that** said prescribed position is the center position of said field of view.

6. A probe replacement method for a scanning probe microscope comprising:
a cantilever (21) having a probe (20) at the distal end and a cantilever holder (21-1) at the basal end; and a measurement unit (24, 31, 32) for measuring a physical quantity generated between said probe and a sample (12) when said probe scans the surface of said sample in a configuration in which the surface of said sample is scanned with said probe and the surface of the sample is measured while said physical quantity is kept constant by the measuring unit;
a cantilever mount (22) provided with a mechanism for attaching and detaching said cantilever (21) via said cantilever holder (21-1), a cantilever storage unit (30) for storing a plurality of cantilevers, first movement means (11) for moving the position of the cantilever storage unit, and observation means (18, 19) for observing the position of the mounted cantilever (21); and
a positioning mechanism (101) moved by said first movement means (11), for adjusting the position of said cantilever (21) attached to said cantilever mount (22), said method **characterized in** comprising:
steps (S111, S112) for performing alignment between said cantilever mount (22) and said cantilever storage unit (30) using said first movement means (11), selecting one cantilever from said cantilever storage unit, and mounting the cantilever on said cantilever mount (22) via said cantilever holder (21-1);
a step (S113) for performing alignment between said positioning mechanism (101) and said cantilever mount (22) on which said cantilever is mounted, using said first movement means (11);
a step (S115) for capturing an image of said mounted cantilever using said observation means (18, 19) after said selected cantilever is mounted on said cantilever mount (22); and
steps (S116, S117) for changing the position of said cantilever with respect to said cantilever mount using said positioning mechanism (101) and moving the position of said cantilever to a prescribed position in the field of view of said observation means.

7. The probe replacement method for a scanning probe microscope according to claim 6, **characterized in that** said positioning mechanism (101) has a pushing member (102) for pushing the side surface of said cantilever holder (21-1) attached to said cantilever mount.

8. The probe replacement method for a scanning probe microscope according to claim 7, **characterized in that** said pushing member (102) is an L-shaped pushing member that is in contact with two of the side surfaces of said cantilever holder having a rectangular planar shape.

9. The probe replacement method for a scanning probe microscope according to claim 6, **characterized in** comprising steps (S118, S119) for determining the attachment state of said cantilever attached to said cantilever mount.

10. The probe replacement method for a scanning probe microscope according to claim 6, **characterized in** further comprising adjustment steps (S125 through S132) for the optical axis adjustment of the position of the photosensor (27) and the laser light source (26) of an optical detection device for radiating laser light onto said cantilever and generating laser light for detecting the curvature of said cantilever.

11. The probe replacement method for a scanning probe microscope according to claim 10, **characterized in** comprising steps (S 118 and S121) for detecting the distal end position of said cantilever and storing a coordinate value thereof; and
an adjustment step for the optical axis adjustment of the position of the photosensor (27) and the laser light source (26) of an optical detection device for radiating laser light onto said cantilever and generating laser light for detecting the curvature of said cantilever based on said stored coordinate value.

12. The probe replacement method for a scanning probe microscope according to claim 6, **characterized in** having an optical microscope (18) as said observation means, and comprising a step (S118) for performing pattern recognition and image processing using an image obtained by the optical microscope; and a step (S119) for identifying the attachment position of said cantilever attached to said cantilever mount.

13. The probe replacement method for a scanning probe microscope according to claim 12, **characterized in** comprising a step (S118) for detecting the coordinate value of the distal end position or central axis of said cantilever by performing image processing of the image obtained by said observation means when said attachment position of said cantilever is identified; and a step (S121) for storing said coordinate value.

14. The probe replacement method for a scanning probe microscope according to claim 13, **characterized in** comprising:
a step (S125) for calculating a range of target positions for radiating said laser light onto said cantilever according to the type of said cantilever based on the stored coordinate value of said distal end position or said central axis of said cantilever; and
steps (S128, S129) for automatically setting the irradiation position of said laser light radiated onto said cantilever to a prescribed position within said radiation target range using the image obtained by said observation means and the output signal from said photosensor, while moving the position of said laser light source in relative fashion by the second movement mechanism.

15. The probe replacement method for a scanning probe microscope according to claim 14, **characterized in** comprising steps (S130, S132) for moving the position of said photosensor in relative fashion by third movement means and automatically setting the laser light reception position on said photosensor to a prescribed position, based on the stored coordinate value of said distal end position or said central axis of said cantilever.

16. The probe replacement method for a scanning probe microscope according to claim 14, **characterized in** comprising;
a step for determining the total surface area of the portion irradiated by the laser light on said cantilever on the basis of a prescribed method by using the entire field of view of said observation means;
a step for determining the surface area of the portion irradiated by laser light in an image processing window;
a step for determining the ratio of laser light radiated within the proper irradiation range in the entire surface area by computing the ratio of the surface areas; and
a step for determining the irradiation position of the laser light on the back surface of the cantilever on the condition that the irradiation ratio is equal to or greater than a prescribed value.
